# EUROPÄISCHE PATENTANMELDUNG

(11) **EP 1 039 489 A2**
(43) Veröffentlichungstag der Anmeldung: **27.09.2000**
(21) Anmeldenummer: 00105831.2
(22) Anmeldetag: 20.03.2000
(51) Int. Cl.: H01F 7/02

(54) **Magnethalterung**

(30) Priorität: 22.03.1999 DE 29905114 U; 13.10.1999 DE 29918055 U
(71) Anmelder: Beutel, Rudolf, 70806 Kornwestheim (DE)
(72) Erfinder: Beutel, Rudolf, 70806 Kornwestheim (DE)
(74) Vertreter: Pfiz, Thomas

(57) **Zusammenfassung**

Die Erfindung betrifft Magnethalterung zur lösbaren Verbindung von magnetisierbaren Bauelementen (10,12) wie Präsentations- und Warenträger, Regalteile, Haken, Leuchten, Bilder und dergleichen, mit mindestens einem dauermagnetischen Haftmagnet (14) als zweiseitiges Verbindungsmittel zwischen zwei Bauelementen (10,12). Zur Verbesserung der Verbindungswirkung insbesondere bei Querbelastung wird vorgeschlagen, daß der stabförmige Haftmagnet (14) an seinen voneinander abgewandten Polflächen (18) jeweils eine elastische Haftschicht (20) zur Erhöhung des Reibschlusses zu dem Bauelement (10,12) aufweist.

## Beschreibung

Die Erfindung betrifft eine Magnethalterung zur lösbaren Verbindung von magnetisierbaren Bauelementen wie Präsentations- und Warenträger, Regalteile, Haken, Leuchten, Bilder und dergleichen, mit mindestens einem dauermagnetischen Haftmagnet als zweiseitiges Verbindungsmittel zwischen zwei Bauelementen.

Allgemein sind Magnethalterungen in vielfältigen Anwendungen bekannt, beispielsweise um Utensilien an wandfesten Halteflächen auf einfache Weise lösbar zu plazieren. Die eingesetzten Dauermagnete haben in der Regel eine hohe Anziehungskraft senkrecht zur Polfläche, lassen sich jedoch beim Auftreten von Querkräften leicht verschieben.

Ausgehend hiervon liegt der Erfindung die Aufgabe zugrunde, eine Magnethalterung zur zweiseitigen Befestigung dahingehend zu verbessern, daß bei einfacher und flexibler Herstellung der Verbindung eine zuverlässige Haltefunktion gewährleistet ist.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Erfindungsgemäß wird vorgeschlagen, daß der Haftmagnet als Stabmagnet an seinen voneinander abgewandten Polflächen jeweils eine Haftschicht zur Erhöhung des Reibschlusses zu dem Bauelement aufweist. Durch diese Maßnahme wird eine höhere Haftreibung auf den Verbindungsflächen erreicht und somit eine ungewollte Relativbewegung der zu verbindenden Bauteile vermieden. Damit lassen sich auch aus einer Vielzahl von Einzelbauteilen zusammengesetzte Aufbauten mit geringem Handhabungsaufwand rasch und flexibel erstellen.

Eine weitere Verbesserung der Haltewirkung läßt sich dadurch erreichen, daß die Haftschicht aus einem vorzugsweise elastisch verformbaren Kunststoffmaterial besteht. Von besonderem Vorteil ist es, wenn die Haftschicht durch einen dauerelastischen und lösungsmittelfreien rutschhemmenden Belag mit Adhäsionswirkung zwischen der Polfläche und der Verbindungsfläche des jeweils zu verbindenden Bauelements gebildet ist. Insbesondere kann die Haftschicht aus einem vorzugsweise getrockneten Klebstoff mit zumindest einer Restklebwirkung besteht. Eine alternative vorteilhafte Ausführung sieht vor, daß die Haftschicht aus einem die Polflächen überdeckenden Elastomermaterial, insbesondere Natur- oder Kunstkautschuk besteht.

Um eine hohe magnetische Anziehungs- bzw. Haftkraft zu erreichen, ist es von Vorteil, wenn der Haftmagnet aus einer Seltenerden-Legierung als Magnetwerkstoff gebildet ist. Eine weitere Verbesserung wird dadurch erreicht, daß der Haftmagnet im mantelseitigen Abstand von einer magnetisierbaren Metallhülse umschlossen ist. Vorteilhafterweise ist zwischen dem Haftmagnet und der Metallhülse eine Zwischenschicht aus unmagnetischem Werkstoff angeordnet oder ein Luftspalt freigehalten. Um einen magnetischen Rückschluß zwischen den Bauteilen zuverlässig zu erzielen, ist es vorteilhaft, wenn die Metallhülse mit dem Haftmagnet stirnseitig bündig abschließt oder im Bereich der Haftschicht axial zurückversetzt ist.

Eine weitere vorteilhafte Ausgestaltung der Erfindung sieht ein im seitlichen Abstand von dem Haftmagnet zwischen den Bauelementen einklemmbares, vorzugsweise aus Kunststoff bestehendes elastisches Rutschhemmstück vor. Damit läßt sich eine Verbesserung der Haltewirkung bei Querbeanspruchung der Verbindung erreichen. Dabei ist es günstig, wenn das Rutschhemmstück in Verbindungsrichtung zwischen den Bauelementen gesehen länger als der Haftmagnet ist, so daß das Rutschhemmstück aufgrund der Haftkraft des Magneten zwischen den Bauelementen kraftschlüssig gehalten ist.

Vorteilhafterweise ist der Haftmagnet mit rechteckigem oder zylindrischem Querschnitt axial zwischen den Polflächen flach ausgebildet.

Beim Lösen der Verbindung ist es häufig wünschenswert, daß die Halterung an einem definierten Verbindungspartner verbleibt. Um dies sicherzustellen, sieht eine bevorzugte Ausführung vor, daß der Haftmagnet an einer Polfläche eine außenkonvexe Haftschicht und an der anderen Polfläche eine stirnseitig plane Haftschicht aufweist.

Vorteilhafterweise beträgt die Schichtdicke der Haftschicht des Haftmagneten zwischen 0,05 und 0,2 mm.

Zur Verbindung großflächiger Bauteile oder bei hoher Belastung ist es vorteilhaft, wenn eine Mehrzahl von Haftmagneten und gegebenenfalls Rutschhemmstücken als punktuelle Verbindungsmittel zwischen den Bauelementen im Abstand voneinander verteilt angeordnet sind.

Im folgenden wird die Erfindung anhand der in der Zeichnung in schematischer Weise dargestellten Ausführungsbeispiele näher erläutert. Es zeigen
- Fig. 1: eine Magnethalterung zur lösbaren Verbindung von plattenförmigen Bauelementen in einer teilweise geschnittenen Seitenansicht;
- Fig. 2: eine weitere Ausführung einer Magnethalterung mit konvexer Beschichtung des Haftmagneten in einem Vertikalschnitt;
- Fig. 3 und 4: eine Magnethalterung mit ummanteltem Haftmagnet mit runder und rechteckiger Kontur in einer Stirnseitenansicht;
- Fig. 5 und 6: eine Magnethalterung mit Haken in Seiten- und Vorderansicht; und
- Fig. 7 und 8: eine weitere Ausführungsform mit mehreren Haftmagneten zur Halterung einer Hakenleiste in Seiten- und Vorderansicht.

Die in der Zeichnung dargestellte Magnethalterung dient zur lösbaren gegenseitigen Verbindung von magnetisierbaren weichmagnetischen Bauelementen 10, 12 und umfaßt zu diesem Zweck mindestens einen dauermagnetischen Stabmagnet als Haftmagnet 14 sowie gegebenenfalls ein oder mehrere dem Haftmagnet 14 zugeordnete Rutschhemmstücke 16.

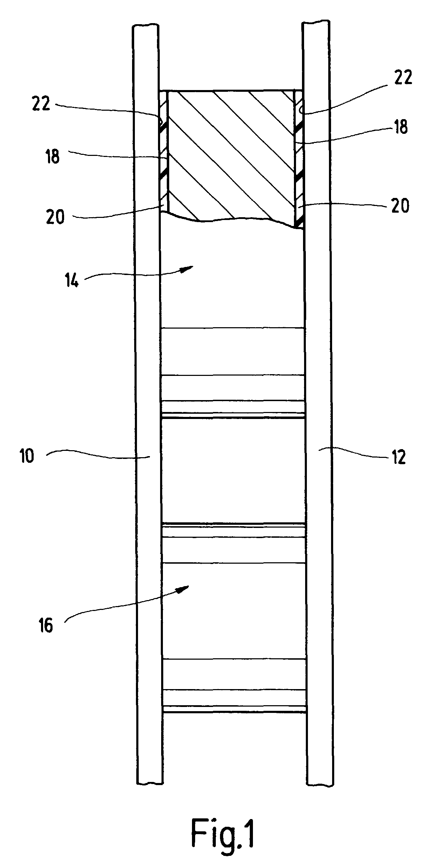

Der in Fig. 1 gezeigte Haftmagnet 14 ist als flacher Rundmagnet ausgebildet, der an seinen voneinander abgewandten Polflächen 18 jeweils eine Haftschicht 20 zur Erhöhung des Reibschlusses bzw. der Haftreibung an der Verbindungsfläche 22 der magnetisierbaren plattenförmigen Bauteile 10, 12 aufweist. Die Haftschicht 20 sollte zur Erzielung eines hohen Reibungskoeffizienten aus einem elastisch verformbaren Kunststoffmaterial bestehen. Bevorzugt ist hier eine ausgehärtete bzw. getrocknete und damit lösungsmittelfreie Klebstoftschicht 20 vorgesehen, die an den Verbindungsflächen 22 unter der magnetischen Anziehungskraft zusätzlich eine Restklebwirkung bzw. Adhäsionswirkung entfaltet. Grundsätzlich ist es vor allem zum Schutz von empfindlichen Verbindungsflächen auch möglich, die Haftschicht 20 durch ein aufgespritztes Gummimaterial zu bilden.

Um eine besonders hohe Koerzitivfeldstärke zu erreichen, ist als Dauermagnetwerkstoff eine SeltenerdenKobalt-Legierung vorgesehen. In der beschriebenen Bauform kann der Rundmagnet 14 eine Länge zwischen den Polflächen 18 von 3 mm und einen Durchmesser von 15 mm aufweisen, während die Haftschichten 20 eine Schichtdicke von jeweils 0,15 mm besitzen.

Das in seitlichem Abstand zu dem Haftmagnet 14 angeordnete Rutschhemmstück 16 ist ebenfalls scheibenförmig flach ausgebildet und besteht aus einem elastischen Kunststoffmaterial. Es besitzt eine geringfügig größere axiale Länge als der Haftmagnet 14. Auf diese Weise wird das Rutschhemmstück 16 zwischen den parallel gehaltenen Bauelementen 10, 12 kraftschlüssig gehalten bzw. unter axialer Verformung eingeklemmt, so daß ein ungewolltes Verschieben der Bauteile 10, 12 quer zur Verbindungsrichtung weiter erschwert wird.

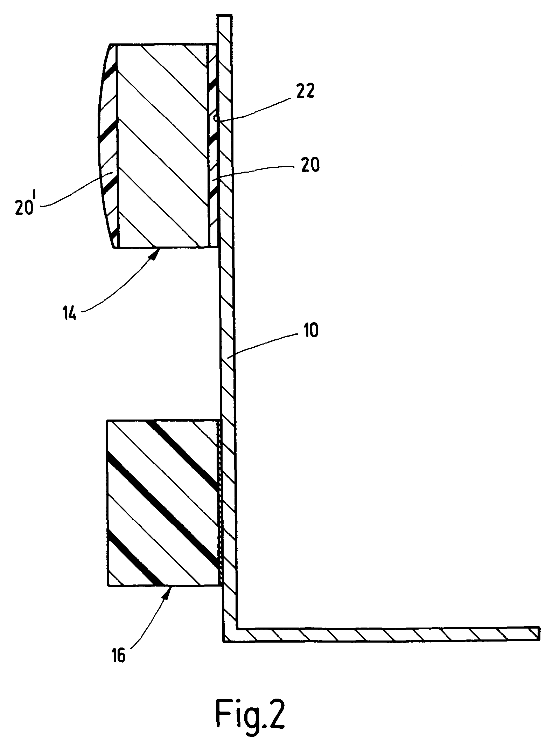

In Fig. 2 ist als zu verbindendes Bauteil 10 eine winkelförmige Ablageschiene gezeigt, die an einer nicht dargestellten Gegenhalterwand als weiteres Bauteil magnetisch befestigbar ist. Der Haftmagnet 14 weist hier eine plane Haftschicht 20 zur Anlage an die Ablageschiene 10 und an seiner gegenüberliegenden Polfläche eine außenkonvexe Haftschicht 20' zur Anlage an die Gegenhalterwand auf. Durch diese Maßnahme ist sichergestellt, daß beim Lösen der Halterung der Haftmagnet 14 aufgrund der besseren Haftwirkung an der Ablageschiene 10 verbleibt.

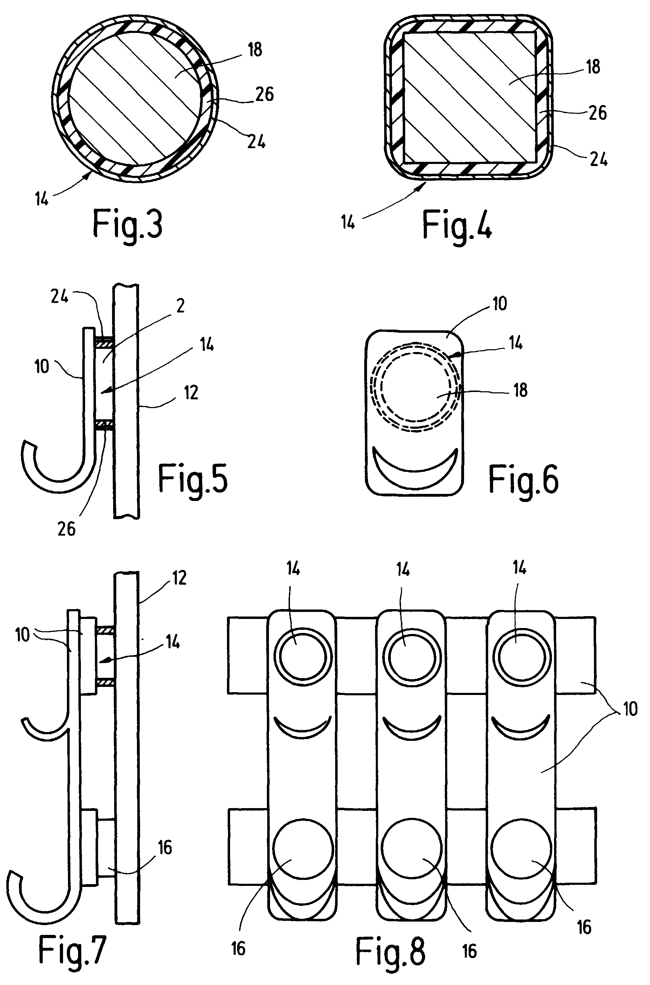

Bei den in Fig. 3 und 4 gezeigten Ausführungsbeispielen ist der Haft- bzw. Stabmagnet 14 im mantelseitigen Abstand von einer magnetisierbaren Metallhülse 24 umschlossen, Zwischen dem Haftmagnet 14 und der Metallhülse 24 ist eine Zwischenschicht aus Kunststoff als unmagnetischer Abstandshalter vorgesehen. Durch die Metallhülse 24 wird ein magnetischer Rückschluß zwischen den Bauelementen 10, 12 erreicht, so daß die Haft- bzw. Haltekratt erheblich verstärkt wird. Eine solche Ausführung kann, wie in Fig. 5 und 6 gezeigt, als Halterung für einen Haken 10 an einer Metallwand 12 dienen, wobei die hohe Haftkraft dem Haken eine hohe Tragfähigkeit verleiht und zugleich eine einfache Anpassung an veränderte Plazierungswünsche durch Versetzen der Halterung möglich ist.

Wie in Fig. 7 und 8 gezeigt, können auch eine Mehrzahl von Haftmagneten 14 und zugeordneten Rutschhemmstücken 16 als punktuelle Verbindungsmittel zur lösbaren Befestigung größerer Bauteile, beispielsweise einer kompletten Haken- bzw. Garderobenleiste 10 an einer Metallwand 12, vorgesehen sein.

Eine besonders bevorzugte Einsatzmöglichkeit der erfindungsgemäßen Magnetanordnungen liegt im Laden- und Messebau nun raschen und flexiblen Aufbau von Präsentationsgestellen und Warenträgern.

## Patentansprüche

1. Magnethalterung zur lösbaren Verbindung von magnetisierbaren Bauelementen (10,12) wie Präsentations- und Warenträger, Regalteile, Haken, Leuchten, Bilder und dergleichen, mit mindestens einem dauermagnetischen Haftmagnet (14) als zweiseitiges Verbindungsmittel zwischen zwei Bauelementen (10,12), **dadurch gekennzeichnet,** daß der stabförmige Haftmagnet (14) an seinen voneinander abgewandten Polflächen (18) jeweils eine Haftschicht (20) zur Erhöhung des Reibschlusses zu dem Bauelement (10,12) aufweist.

2. Magnethalterung nach Anspruch 1, **dadurch gekennzeichnet,** daß die Haftschicht (20) aus einem vorzugsweise elastisch verformbaren Kunststoffmaterial besteht.

3. Magnethalterung nach Anspruch 1 oder 2, **dadurch gekennzeichnet,** daß die Haftschicht (20) durch einen dauerelastischen und lösungsmittelfreien rutschhemmenden Belag mit Adhäsionswirkung zwischen der Polfläche (18) und der Verbindungsfläche (22) des jeweils zu verbindenden Bauelements (10,12) gebildet ist.

4. Magnethalterung nach einem der Ansprüche 1 bis 3, **dadurch gekennzeichnet,** daß die Haftschicht (20) aus einem vorzugsweise getrockneten, zumindest eine Restklebwirkung entfaltenden Klebstoff besteht.

5. Magnethalterung nach einem der Ansprüche 1 bis 3, **dadurch gekennzeichnet,** daß die Haftschicht (20) aus einem die Polflächen (18) überdeckenden Elastomermaterial, insbesondere Natur- oder Kunstkautschuk besteht.

6. Magnethalterung nach einem der Ansprüche 1 bis 5, **dadurch gekennzeichnet,** daß der Haftmagnet (14) aus einer Seltenerden-Legierung als Magnetwerkstoff gebildet ist.

7. Magnethalterung nach einem der Ansprüche 1 bis 6, **dadurch gekennzeichnet,** daß der Haftmagnet (14) im mantelseitigen Abstand von einer magnetisierbaren Metallhülse (24) umschlossen ist

8. Magnethalterung nach Anspruch 7, **dadurch gekennzeichnet,** daß zwischen dem Haftmagnet (14) und der Metallhülse (24) eine Zwischenschicht (26) aus unmagnetischem Werkstoff angeordnet oder ein Luftspalt freigehalten ist.

9. Magnethalterung nach Anspruch 7 oder 8, **dadurch gekennzeichnet**, daß die Metallhülse (24) mit dem Haftmagnet (14) stirnseitig bündig abschließt oder im Bereich der Haftschicht (20) axial zurückversetzt ist.

10. Magnethalterung nach einem der Ansprüche 1 bis 9, **gekennzeichnet durch** mindestens ein im seitlichen Abstand von dem Haftmagnet (14) zwischen den Bauelementen (10,12) einklemmbares, vorzugsweise aus Kunststoff bestehendes elastisches Rutschhemmstück (16).

11. Magnethalterung nach Anspruch 10, **dadurch gekennzeichnet,** daß das Rutschhemmstück (16) in Verbindungsrichtung zwischen den Bauelementen (10,12) gesehen länger als der Haftmagnet (14) ist, so daß das Rutschhemmstück (16) aufgrund der Haftkraft des Magneten zwischen den Bauelementen (10,12) kraftschlüssig gehalten ist.

12. Magnethalterung nach einem der Ansprüche 1 bis 11, **dadurch gekennzeichnet,** daß der Haftmagnet (14) mit rechteckigem oder zylindrischem Querschnitt axial zwischen den Polflächen (18) flach ausgebildet ist.

13. Magnethalterung nach einem der Ansprüche 1 bis 12, **dadurch gekennzeichnet,** daß der Haftmagnet (14) an einer Polfläche (18) eine außenkonvexe Haftschicht (20') und an der anderen Polfläche (18) eine stirnseitig plane Haftschicht (20) aufweist.

14. Magnethalterung nach einem der Ansprüche 1 bis 13, **dadurch gekennzeichnet**, daß die Schichtdicke der Haftschicht (20) des Haftmagneten (14) zwischen 0,05 und 0,2 mm beträgt.

15. Magnethalterung nach einem der Ansprüche 1 bis 14, **dadurch gekennzeichnet**, daß eine Mehrzahl von Haftmagneten (14) und gegebenenfalls Rutschhemmstücken (16) als punktuelle Verbindungsmittel zwischen den Bauelementen (10,12) im Abstand voneinander verteilt angeordnet sind.
